# EUROPEAN PATENT APPLICATION

(11) **EP 2 146 310 A1**
(43) Date of publication of application: **20.01.2010**
(21) Application number: 08752509.3
(22) Date of filing: 09.05.2008
(51) Int. Cl.: G06Q 20/00, G06Q 30/00

(54) **INFORMATION PROCESSING METHOD AND ELECTRONIC MONEY SYSTEM**

(30) Priority: 09.05.2007 JP 2007124215
(71) Applicant: Sony Corporation, Tokyo 108-0075 (JP)
(72) Inventor: SAKO, Yoichiro, Tokyo 108-0075 (JP); KIMURA, Keiji, Tokyo 108-0075 (JP); FUKUSHIMA, Takashi, Tokyo 108-0075 (JP); TAKEHARA, Mitsuru, Tokyo 108-0075 (JP)
(74) Representative: Scaddan, Gareth Casey
(86) International application number: PCT/JP2008/058623
(87) International publication number: WO 2008/140040

(57) **Abstract**

The present invention relates to an information processing method and an electronic money system that achieve contribution to the realization of a global or social objective, such as protection of global environment, by using the characteristics of electronic money, which is money, a point, or a right of use represented by electronic data.

When an electronic money card 10 is presented to an electronic money interface 27, a controller 24 detects, by using a use/use status detection unit 31, the use of the electronic money card 10 and the time and place at which the electronic money card 10 is used. In a case where the use or the like is in line with an objective such as protection of global environment or social contribution because the use is purchase or use of a commercial product or a service which meets certain conditions and for which saving of resources or energy is achieved, the controller 24 performs processing for increasing the value of electronic money. Increasing the value is making a discount, increasing the balance, providing a point, or increasing a range in which the right of use can be granted.

## Description

### Technical Field

The present invention relates to an information processing method and a system for electronic money, which is money, points, or a right of use represented by electronic data.

### Background Art

Due to global environmental degradation such as global warming and waste problems, the promotion of formation of a sustainable society and a recycling-oriented society has been called for. Companies and corporations have been promoting the saving of resources and energy, such as reduction, reuse, and recycling.

Internationally, attempts to formulate systems for reducing the amount of emission of carbon dioxide, which causes global warming, have been carried out. A surcharge system and an emission-right market system have been planned.

Furthermore, the use of electronic money in the trade of emission rights for carbon oxide is disclosed in Patent Document 1 (Japanese Unexamined Patent Application Publication No. 2001-306839).

In addition, the use of electronic money as an aid for group activities is disclosed in Patent Document 2 (Japanese Unexamined Patent Application Publication No. 2005-258984), and the execution of electronic business transactions using electronic money is disclosed in Patent document 3 (Japanese Unexamined Patent Application Publication No. 2003-323485).

In electronic money systems using IC cards, electronic money is stored in an IC card by recording of electronic data. When a user purchases a commercial product or receives a service, the user presents the IC card so that an amount can be deducted from the balance of electronic money by rewriting of the data. Accordingly, the deducted amount of electronic money is transferred to a seller of the commercial product or a provider of the service as a payment for a product purchase price or a service use fee.

In addition, by connecting a terminal such as a PC (Personal Computer) to the Internet, a user is able to add an amount of electronic money from a financial institution account to an IC card or, conversely, to add a remaining amount of electronic money from the IC card to the account. At the same time, the user is also able to make a payment by transferring data via the Internet.

In addition, electronic money is stored in IC cards. Thus, compared with a case of using conventional magnetic striped cards, electronic money has an advantage of being difficult to forge and falsify.

Furthermore, as also disclosed in Patent Document 4 (Japanese Unexamined Patent Application Publication No. 2006-318453), data transferred between an IC card and a reader/writer is encrypted, thus ensuring security.

The above-listed prior art documents are as follows:
Patent Document 1: Japanese Unexamined Patent Application Publication No. 2001-306839
Patent Document 2: Japanese Unexamined Patent Application Publication No. 2005-258984
Patent Document 3: Japanese Unexamined Patent Application Publication No. 2003-323485
Patent Document 4: Japanese Unexamined Patent Application Publication No. 2006-318453

### Disclosure of Invention

### Technical Problem

The prevention of global warming to protect the global environment has been considered by many people and companies. However, in actuality, it is still difficult to say that practical actions have been taken sufficiently.

The method disclosed in Patent Document 1 or 2 only uses electronic money instead of currency or checks, as payment means, and cannot directly take part in or contribute to protection of global environment and social support.

Thus, the present invention achieves contribution to the realization of a global or social objective, such as protection of global environment, by using the characteristics of electronic money.

### Technical Solution

An information processing method according to a first invention is characterized by including
a detecting step of detecting, when electronic money, which is money, a point, or a right of use represented by electronic data, is used, a use or a use status of the electronic money;
a determining step of determining whether or not the detected use or use status is in line with an objective set in advance; and
a proceeding step of performing processing for increasing the value of the electronic money when it is determined that the use or the use status is in line with the objective.

An information processing method according to a second invention is characterized by including
a detecting step of detecting, when electronic money, which is money, a point, or a right of use represented by electronic data, is used, environment or action of a user of the electronic money as a user status;
a determining step of determining whether or not the detected user status is in line with an objective set in advance; and
a proceeding step of performing processing for increasing the value of the electronic money when it is determined that the user status is in line with the objective.

### Advantageous Effects

In the above-described information processing method according to the first invention, in a case where the use of electronic money is purchase or use of a commercial product or a service which meets certain conditions and for which saving of resources or energy is achieved, that is, the use of the electronic money is in line with an objective such as protection of global environment, or similarly, in a case where the time or place at which the electronic money is used is in line with the objective such as protection of global environment, processing for increasing the value of the electronic money, such as making a discount of a product purchase price or a service use fee, increasing the balance, providing a point, or increasing a range in which a right of use can be granted, is performed.

Thus, a user intends to use electronic money for the use or the use status which is in line with the objective such as protection of global environment. Thus, the first invention contributes to the realization of the objective such as protection of global environment.

In the above-described information processing method according to the second invention, when a user sets, for cooling, an air-conditioning temperature to be higher, sets, for heating, an air-conditioning temperature to be lower, or moves at a movement speed lower than or equal to a predetermined speed by bicycle or on foot, that is, the environment or the action of the user is in line with an objective such as protection of global environment, similarly, processing for increasing the value of the electronic money is performed.

Thus, the user intends to set the environment or action of the user so as to be in line with the objective such as protection of global environment. Thus, the second invention contributes to the realization of the objective such as protection of global environment.

As described above, according to the present invention, contribution to the realization of a global or social objective, such as protection of global environment, can be achieved.

### Brief Description of Drawings

[Fig. 1] Fig. 1 is an illustration showing an example of an electronic money medium.
[Fig. 2] Fig. 2 is an illustration showing a case where track record history information is recorded in an electronic money medium.
[Fig. 3] Fig. 3 is an illustration showing a case where user status information is recorded in an electronic money medium.
[Fig. 4] Fig. 4 is an illustration showing an example of an electronic money system in which a first method is performed.
[Fig. 5] Fig. 5 is an illustration showing an example of a process of the first method.
[Fig. 6] Fig. 6 is an illustration showing an example of a detection system for a second method.
[Fig. 7] Fig. 7 is an illustration showing an example of an electronic money system in which the second method is performed.
[Fig. 8] Fig. 8 is an illustration showing an example of a process of the second method.

### Explanation of Reference Numerals

Since all the principal units are described in the drawings, description of those units will be omitted here.

### Best Modes for Carrying Out the Invention

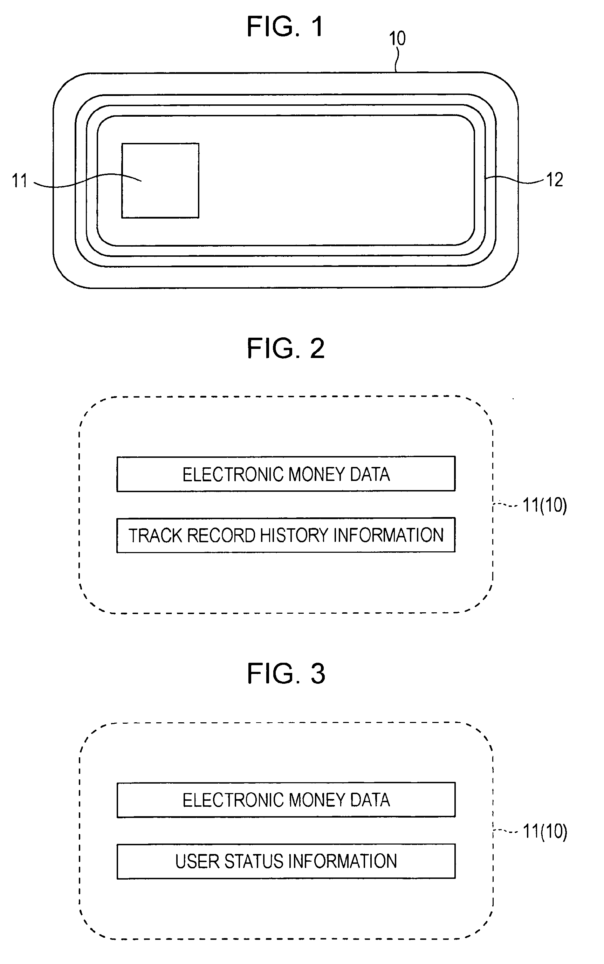

### [1. Electronic Money and Electronic Money Medium: Figs. 1 to 3]

### (1-1. Electronic Money and Electronic Money Medium: Fig. 1)

In the present invention, electronic money represents money, points, or a right of use by using electronic data.

The amount of money may be indicated by any currency unit, such as yen or dollar. Points can be anything as long as they can be exchanged for a commercial product, a service, or the like in accordance with the number of points. With the right of use, a service or a commercial product can be used within a certain range, in terms of use, time, or place.

Note that commercial products in this case are not necessarily visible, but may be non-visible, like content such as music or videos.

An electronic money medium is a recording medium, that is, a so-called electronic wallet, such as an IC card in which electronic money data is recorded so that electronic money can be stored.

Electronic money media are categorized by different communication methods into a contact type including a terminal, in which by inserting the terminal into a reader/writer, electric power is supplied and data is transferred, a non-contact type including an antenna, in which by causing the antenna to approach a reader/writer, electric power is supplied and data is transferred, and a type having both the functions of the contact type and the non-contact type. An electronic money medium may be of any type.

In addition, IC cards are categorized by different IC chip configurations into a type in which a memory and a CPU are mounted, a type in which a memory and a logic circuit that performs simple control are incorporated, and a type in which only a memory is provided and a CPU is not provided. An IC card may be of any type.

Furthermore, electronic money systems are categorized into a prepaid type in which value is added (charged) in advance to an electronic money medium and a type in which a post-payment type with the provision of credit is combined with the prepaid type. An electronic money system may be of any type.

Portable terminals such as cellular phone terminals containing an electronic money medium such as an IC card are one type of electronic money media.

Fig. 1 shows an electronic money card, which is an example of an electronic money medium. An electronic money card 10 in this example is a non-contact IC card such as a FeliCa^{®} card. The electronic money card 10 includes an IC chip 11 and an antenna 12. Electronic money data is recorded in a memory inside the IC chip 11.

(1-2. Recording of Track Record History or User Status: Figs. 2 and 3) In the present invention, as an example of a method, a track record history is recorded as track record history information in the memory inside the IC chip 11 of the electronic money card 10, as shown in Fig. 2.

A track record in this case indicates that the value of electronic money has been increased because the use or use status of electronic money is in line with an objective such as protection of global environment, as described later. The number of times, the total discount value, and the like are recorded as a track record history.

In addition, in the present invention, as another example of a method, a user status is recorded as user status information in the memory inside the IC chip 11 of the electronic money card 10, as shown in Fig. 3.

A user status in this case indicates the environment or action of a user of the electronic money card 10. For environment, the user status indicates the temperature to which an air conditioner is set when cooling or heating is used, and the like. For action, the user status indicates how much speed and by which moving means the user is moving, and the like.

Similarly to electronic money data, track record history information and user status information are encrypted and then recorded.

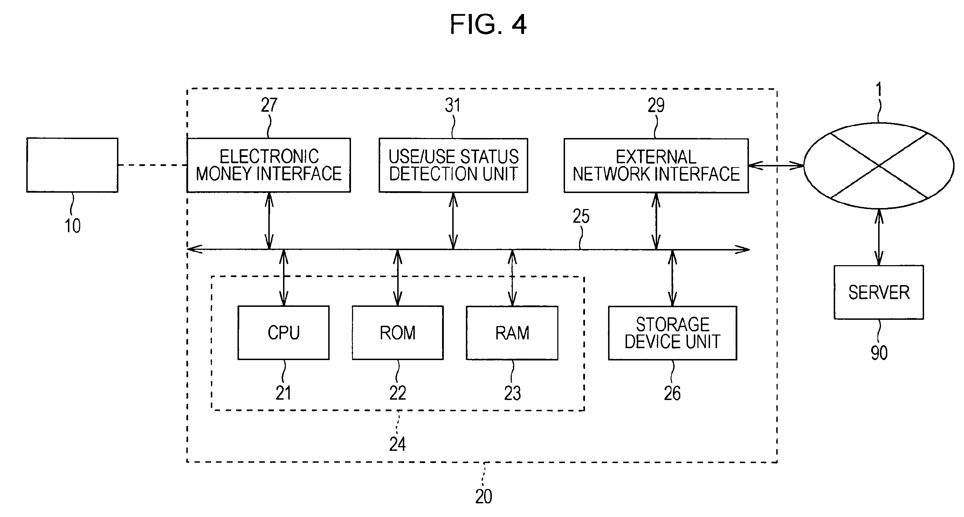

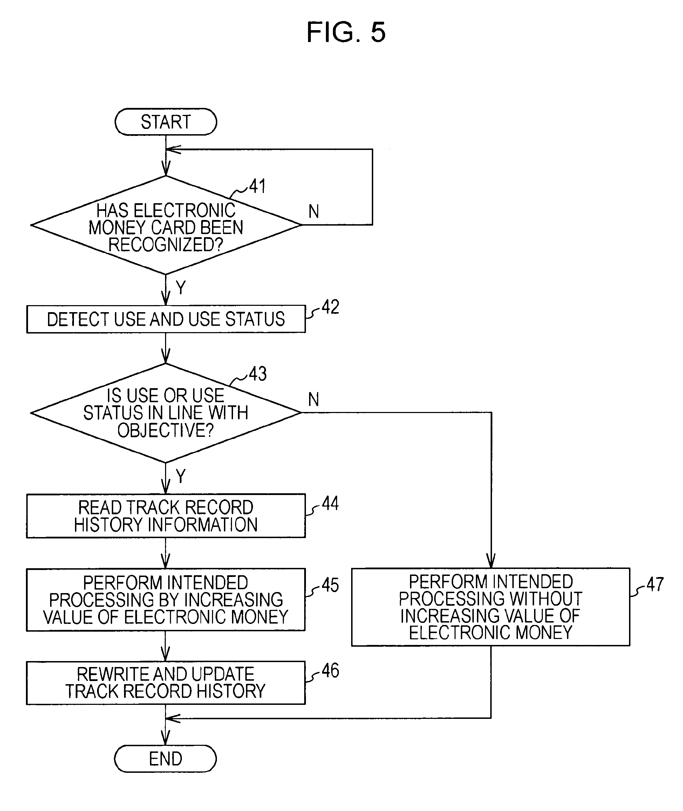

### [2. First Embodiment: Figs. 4 and 5]

A case where the value of electronic money is increased when the use (the purpose of use) or use status of electronic money is in line with an objective such as protection of global environment will be described as a first embodiment.

Fig. 4 shows an example of an electronic money system according to the first embodiment.

In an electronic money system in this example, a terminal device 20 is connected, through the Internet 1, to a server 90 of an administrator who performs operational management of the electronic money system.

The terminal device 20 is installed in a shop which sells commercial products, a facility which provides services, or the like. The terminal device 20 has a function of a reader/writer for electronic money, to which the electronic money card 10 is presented for a payment for a product purchase price, a service use fee, or the like. The terminal device 20 also has a function of detecting the use and use status of electronic money when the electronic money card 10 is presented.

Specifically, the terminal device 20 includes a controller 24 constituted by a CPU 21, a ROM 22, and a RAM 23. A storage device unit 26, an electronic money interface 27 such as a FeliCa^{®} interface, an external network interface 29 used for connection with the Internet 1, and a use/use status detection unit 31 are connected to a bus 25 of the terminal device 20.

When the electronic money card 10 is presented to the terminal device 20 and electronic money stored in the electronic money card 10 is used, the use/use status detection unit 31 detects the use and use status of electronic money.

Specifically, the use is detected when a register which also serves as the terminal device 20 or which is connected to the terminal device 20 in a shop or facility receives, with a barcode reader or the like, entry of the type and name of a commercial product to be purchased by a user or a service to be provided to a user.

The use status indicates the time or place at which electronic money is used. The place indicates a shop, facility, or area in which the terminal device 20 is installed.

The time can be detected using a time circuit, and the place can be detected when a shop, facility, or area in which the terminal device 20 is installed has been recorded in advance in the ROM 22 or the storage device unit 26 of the terminal device 20. However, the place may be detected using GPS (Global Positioning System), WiFi (Wireless Fidelity), or the like.

When a user purchases a commercial product or receives a service, the user holds the electronic money card 10 over the electronic money interface 27 of the terminal device 20.

At this time, the controller 24 of the terminal device 20 determines whether or not the use or use status detected by the use/use status detection unit 31 is in line with an objective set in advance.

Specifically, in this electronic money system, two objectives, protection of global environment and social contribution, are set.

When the controller 24 determines that the detected use or use status is in line with one of the set objectives, the controller 24 performs processing for increasing the value of electronic money, as described later.

Criteria for determining whether or not the use or use status is in line with one of the objectives is also set in advance.
Specifically, the criteria described below are set.

For the use, when a commercial product or a service which meets certain conditions and for which saving of resources or energy is achieved is purchased or used or natural foods which meet certain conditions are purchased, it is determined that the use is in line with one of the objectives.

Apart from purchase or use of a commercial product or a service, when a donation to social countermeasures, such as measures against environmental problems, measures against poverty, or measures against natural calamities, or to social support, such as food support or medical support, is made using electronic money, it is also determined that the use is in line with one of the objectives.

For the use status, when electronic money is used at a specified time or place, it is determined that the use status is in line with one of the objectives. For example, when a user watches a game of baseball, soccer, or the like played in an outdoor stadium in the daytime, it is determined that the use status is in line with one of the objectives.

Increasing the value of electronic money means making a discount, increasing the balance, providing a point, or increasing a range in which the right of use can be granted. Increasing the range in which the right of use can be granted means extending the period, place, use in which the right of use can be granted.

When, as described above, the processing for increasing the value of electronic money is performed because the use or use status is in line with an objective such as protection of global environment or social contribution, the controller 24 of the terminal device 20 records the fact that the processing has been performed as a track record history in the electronic money card 10, as shown in Fig. 2.

This track record history is referred to when the user uses the same electronic money card 10 next time.

That is, when the electronic money card 10 is presented to the terminal device 20 as described above, in a case where track record history information has been recorded in the electronic money card 10, the controller 24 reads the track record history information. In a case where the controller 24 performs the processing for increasing the value of electronic money as described above, the controller 24 increases the value of electronic money in accordance with the number of times, the total discount value, and the like as the track record history.

Specifically, as the number of times or the total discount value increases, the value of electronic money is more increased. The value of electronic money may be increased in a stepwise manner in which, for example, the discount rate is set to 1% when the number of times ranges from 1 to 5 and the discount rate is set to 1.2% when the number of times ranges from 6 to 10.

In addition, the upper limit of increase in the value may be set or a track record history may be reset to zero after a predetermined number of days has passed.

Fig. 5 shows an example of an electronic money handling process according to the first embodiment described above performed by the controller 24 of the terminal device 20.

In this electronic money handling process, in step 41, it is determined whether or not the electronic money card 10 has been recognized. In a case where the electronic money card 10 is held over the electronic money interface 27 and thus the electronic money card 10 is recognized, the process proceeds to step 42 to detect, using the use/use status detection unit 31, the use and the use status. Then, the process proceeds to step 43 to determine whether or not the use or the use status is in line with an objective, that is, protection of global environment or social contribution.

In a case where the use or the use status is in line with the objective, the process proceeds from step 43 to step 44 to read track record history information from the electronic money card 10. Then, the process proceeds to step 45 to increase the value of electronic money in accordance with the track record history and perform intended processing for receiving a payment for a product purchase price or a service use fee, a donation to social countermeasures or social support, or the like, by using electronic money. Then, the process proceeds to step 46 to rewrite and update the track record history.

Meanwhile, in a case where the use and the use status are not in line with the objective, the process proceeds from step 43 to step 47 to perform intended processing for receiving a payment for a product purchase price, a service use fee, or the like, by using electronic money, without increasing the value of electronic money.

The case where track record history information is recorded in the electronic money card 10 as shown in Fig. 2 and the entire electronic money handling process is performed by the terminal device 20 has been described above. However, the electronic money system may have a configuration in which track record history information is recorded in a storage device inside the server 90 so that part of the electronic money handling process can be performed by the server 90.

Specifically, in this case, the terminal device 20 transmits the use and the use status detected by the use/use status detection unit 31, together with user identification information, such as a number and a name, recorded in the presented electronic money card 10, to the server 90.

The server 90 determines whether or not the use or the use status is in line with the objective. In a case where the use or the use status is in line with the objective, the server 90 transmits information indicating that the use or the use status is in line with the objective, together with a track record history recorded in the storage device inside the server 90 in association with the user identification information or together with information indicating the discount rate corresponding to the track record history, to the terminal device 20. At the same time, the server 90 rewrites the track record history on the assumption that processing for increasing the value of electronic money is performed by the terminal device 20. In a case where the use and the use status are not in line with the objective, the server 90 transmits information indicating that the use and the use status are not in line with the objective to the terminal device 20.

In accordance with the determination result obtained by the server 90, the terminal device 20 performs intended processing by increasing the value of electronic money or without increasing the value of electronic money.

In a case where a track record history is recorded in the storage device inside the server 90, even if the same user uses a plurality of electronic money cards, track record histories can be integrated into one history set and may be shared among the plurality of electronic money cards.

Furthermore, as an electronic money system, the above-described method can be applied to a case where a terminal device is not installed in a shop or facility and is a PC over which the electronic money card 10 is held or a user terminal, such as a cellular phone terminal, containing the electronic money card 10, and a user connects the user terminal to an external network such as the Internet 1 to purchase a commercial product, receive a service, make a donation, or the like.

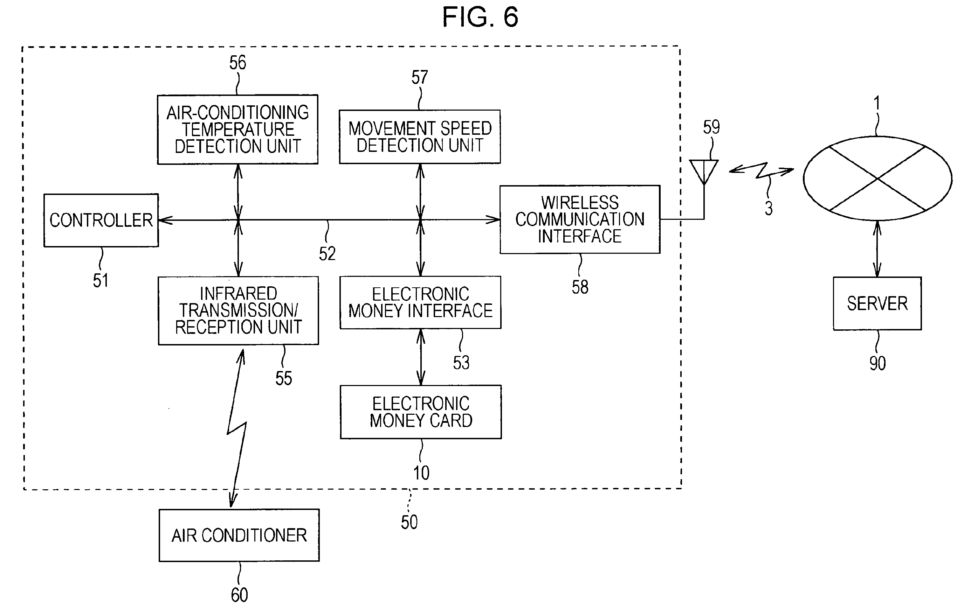

### [3. Second Embodiment: Figs. 6 to 8]

A case where the value of electronic money is increased when the environment or action of a user is in line with an objective, such as protection of global environment, will be described as a second embodiment.

### (3-1. Detection System and Detection Method: Fig. 6)

Fig. 6 shows an example of a system for detecting the environment or action of a user in this case.

In the detection system in this example, since a cellular phone terminal 50 owned by a user contains the electronic money card 10 and the cellular phone terminal 50 also serves as a remote controller of an air conditioner 60, the cellular phone terminal 50 detects the air-conditioning temperature set for cooling or heating as the environment of the user. In addition, since the cellular phone terminal 50 has a positioning function using GPS or a speed-detecting function using various sensors, the cellular phone terminal 50 detects the movement speed when the user moves as the action of the user.

Specifically, the cellular phone terminal 50 includes a controller 51. The electronic money card 10 is connected, via an electronic money interface 53, to a bus 52 of the cellular phone terminal 50. An infrared transmission/reception unit 55, an air-conditioning temperature detection unit 56, a movement speed detection unit 57, and a wireless communication interface 58 are connected to the bus 52. An antenna 59 is connected to the wireless communication interface 58.

The infrared transmission/reception unit 55 also serves as a remote controller of the air conditioner 60. The infrared transmission/reception unit 55 transmits an infrared signal to the air conditioner 60 and receives an infrared signal transmitted from the air conditioner 60.

The air-conditioning temperature detection unit 56 detects the air-conditioning temperature set for cooling or heating, in accordance with the control state of the air conditioner 60 set by the infrared transmission/reception unit 55.

The movement speed detection unit 57 has a positioning function using GPS or a speed-detecting function using various sensors. The movement speed detection unit 57 detects movement speed when a user moves while carrying the cellular phone terminal 50.

The air-conditioning temperature detected by the air-conditioning temperature detection unit 56 and the movement speed detected by the movement speed detection unit 57 are recorded as a user status at certain intervals in the electronic money card 10 contained in the cellular phone terminal 50, or in the storage device inside the server 90 by being transmitted from the antenna 59 via a cellular phone communication line 3 and the Internet 1 to the server 90.

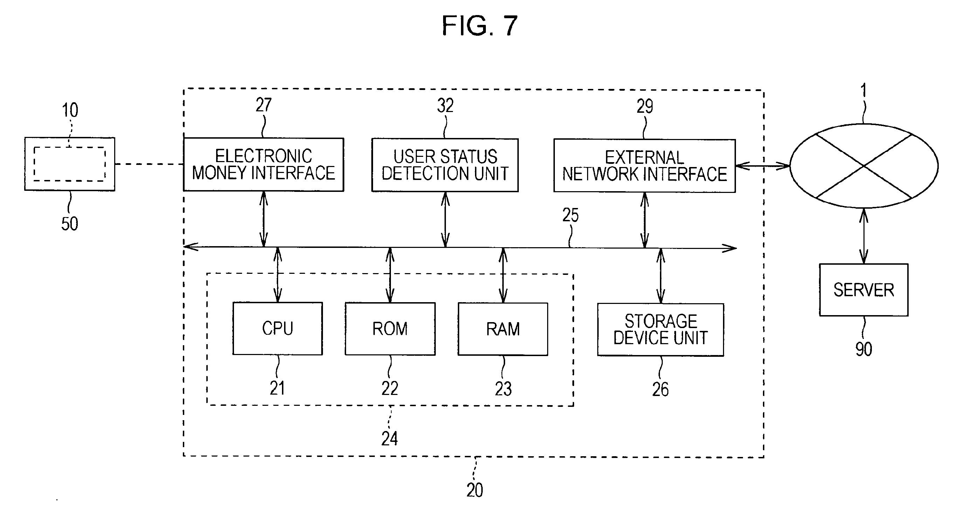

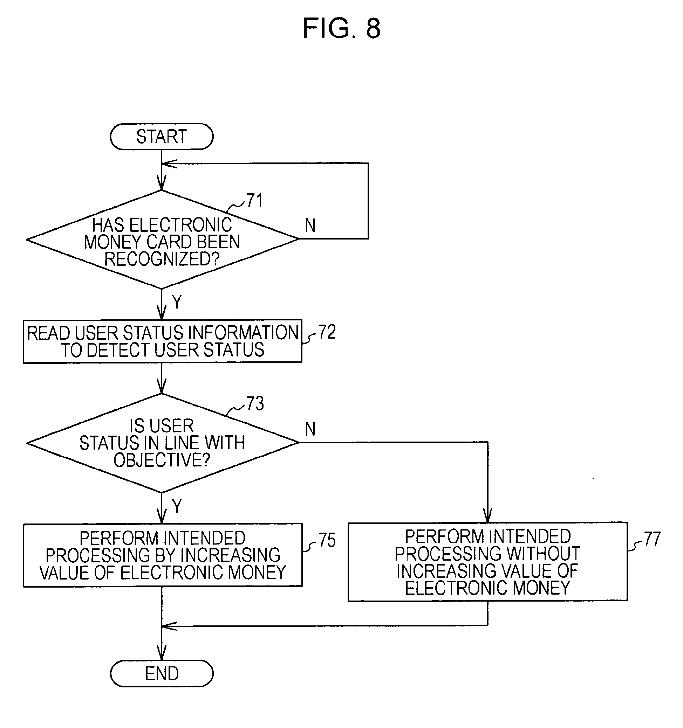

### (3-2. Process regarding Electronic Money System and Electronic Money: Figs. 7 and 8)

Fig. 7 shows an example of an electronic money system according to the second embodiment.

In the electronic money system in this example, as in the electronic money system in the example of Fig. 4, the terminal device 20 is connected via the Internet 1 to the server 90. However, instead of the use/use status detection unit 31 in the case of the example of Fig. 4, a user status detection unit 32 is connected to the bus 25 of the terminal device 20, and an objective, protection of global environment, is set as an objective of the system.

When the cellular phone terminal 50 shown in Fig. 6 is presented to the terminal device 20 and electronic money inside the electronic money card 10 contained in the cellular phone terminal 50 is used, the user status detection unit 32 detects the air-conditioning temperature and the movement speed as a user status, in accordance with user status information recorded in the electronic money card 10 as shown in Fig. 3.

In order to prevent global warming and protect global environment, it is desirable that the air-conditioning temperature is set to be higher for cooling and set to be lower for heating, and it is desirable that, for movement, movement is made by moving means for which saving of resources and energy is achieved, such as bicycle or walking.

Thus, for cooling, the controller 51 detects whether or not the air-conditioning temperature is equal to or higher than a reference temperature set in advance for cooling. In a case where the air-conditioning temperature is equal to or higher than the reference temperature, the controller 51 determines that the air-conditioning temperature is in line with the objective, protection of global environment. For heating, the controller 51 detects whether or not the air-conditioning temperature is lower than or equal to a reference temperature set in advance for heating. In a case where the air-conditioning temperature is lower than or equal to the reference temperature, the controller 51 determines that the air-conditioning temperature is in line with the objective, protection of global environment. For movement, the controller 51 detects whether or not the movement speed when a user moves is lower than or equal to a reference speed set in advance, for example, 30 kilometers per hour. In a case where the movement speed is lower than or equal to the reference speed, the controller 51 infers that the user moved by moving means such as bicycle or walking, and determines that the movement is in line with the objective, protection of global warming.

When both a case where movement is made at a movement speed lower than or equal to the reference speed and a case where movement is made at a movement speed exceeding the reference speed exist as user histories during a predetermined period of time, the average movement speed during the predetermined period of time is detected and a determination as to whether or not the movement speed is in line with the objective, protection of global environment, is performed in accordance with whether or not the average movement speed is lower than or equal to the reference speed. The same applies to the air-conditioning temperature for cooling and the air-conditioning temperature for heating.

In a case where, as described above, it is determined that the user status is in line with the objective, protection of global environment, the controller 24 performs processing for increasing the value of electronic money.

As in the first embodiment, increasing the value of electronic money means making a discount, increasing the balance, providing a point, or increasing a range in which the right of use can be granted.

Fig. 8 shows an example of an electronic money handling process according to the second embodiment described above performed by the controller 24 of the terminal device 20.

In this electronic money handling process, in step 71, it is determined whether or not the electronic money card 10 has been recognized. In a case where the cellular phone terminal 50 containing the electronic money card 10 is held over the electronic money interface 27 and thus the electronic money card 10 is recognized, the process proceeds to step 72 to read user status information from the electronic money card 10 and detect, using the user status detection unit 32, the air-conditioning temperature and the movement speed during a past predetermined period of time as a user status.

Then, in step 73, it is determined whether or not the user status is in line with the objective, protection of global environment, that is, for cooling, whether or not the air-conditioning temperature is equal to or higher than a reference temperature, for heating, whether or not the air-conditioning temperature is lower than or equal to a reference temperature, and for movement speed, whether or not the movement speed is lower than or equal to a reference speed.

In a case where the user status is in line with the objective, the process proceeds from step 73 to step 75 to perform intended processing for increasing the value of electronic money and receiving a payment for a product purchase price or a service use fee, by using electronic money. In a case where the user status is not in line with the objective, the process proceeds from step 73 to step 77 to perform intended processing without increasing the value of electronic money.

Note that in a case where both the air-conditioning temperature and the movement speed are detected as a user status as described above, when both the air-conditioning temperature and the movement speed are in line with the objective, the value of electronic money may be increased more than a case where only one of the air-conditioning temperature and the movement speed is in line with the objective.

The case where user status information is recorded in the electronic money card 10 as shown in Fig. 3 and the entire electronic money handling process is performed by the terminal device 20 has been described above. However, as shown in Fig. 6, the electronic money system may have a configuration in which user status information is recorded in the storage device inside the server 90 so that part of the electronic money handling process can be performed by the server 90.

Specifically, in this case, the user status detection unit 32 is not provided in the terminal device 20. The terminal device 20 transmits user identification information, such as a number and a name, recorded in the electronic money card 10 contained in the cellular phone terminal 50 to the server 90.

The server 90 reads user status information recorded in the storage device inside the server 90 in association with the user identification information, determines whether or not a user status is in line with the objective, protection of global environment, and transmits the determination result to the terminal device 20.

In accordance with the determination result obtained by the server 90, the terminal device 20 performs intended processing by increasing the value of electronic money or without increasing the value of electronic money.

Furthermore, as an electronic money system, the above-described method can be applied to a case where a terminal device is not installed in a shop or facility and is a PC over which the cellular phone terminal 50 containing the electronic money card 10 is held or the cellular phone terminal 50 itself, and a user connects the PC or the cellular phone terminal 50 to an external network such as the Internet 1 to purchase a commercial product, receive a service, make a donation or the like.

Note that in the example described above, the case where the air-conditioning temperature is detected as the environment of a user and the movement speed is detected as the action of the user has been described. However, the environment or action of the user is not limited to this. Any type of environment or action of the user can be detected as long as the environment or action relates to protection of global environment or social contribution.

For example, as the action of a user, the average television view time per day during a predetermined period of time is detected. In a case where the view time is shorter than or equal to a predetermined time, it is determined that the action of the user is in line with the objective, protection of global environment, and the value of electronic money is increased when electronic money is used.

## Claims

1. An information processing method **characterized by** comprising:
a detecting step of detecting, when electronic money, which is money, a point, or a right of use represented by electronic data, is used, a use or a use status of the electronic money;
a determining step of determining whether or not the detected use or use status is in line with an objective set in advance; and
a proceeding step of performing processing for increasing the value of the electronic money when it is determined that the use or the use status is in line with the objective.

2. The information processing method according to Claim 1, wherein the objective is protecting global environment or contributing to society.

3. The information processing method according to Claim 1, wherein a use which is in line with the objective is purchase or use of a commercial product or a service which meets certain conditions and for which saving of resources or energy is achieved, purchase of natural foods which meet certain conditions, or a donation to social countermeasures, such as measures against environmental problems, measures against poverty, or measures against natural calamities, or to social support, such as food support or medical support.

4. The information processing method according to Claim 1, wherein a use status which is in line with the objective is use at a set time or place.

5. The information processing method according to Claim 1, wherein the increasing the value is making a discount, increasing a balance, providing a point, or increasing a range in which the right of use can be granted.

6. The information processing method according to Claim 1, wherein when the processing for increasing the value of the electronic money is performed in the proceeding step, information indicating that the processing for increasing the value of the electronic money has been performed is recorded as a track record history.

7. The information processing method according to Claim 6, wherein the track record history is recorded in an electronic money medium in which the electronic money is stored or in a storage device inside a server provided on a network.

8. The information processing method according to Claim 6, wherein in the proceeding step, the value of the electronic money is increased in accordance with the track record history.

9. An information processing method **characterized by** comprising:
a detecting step of detecting, when electronic money, which is money, a point, or a right of use represented by electronic data, is used, environment or action of a user of the electronic money as a user status;
a determining step of determining whether or not the detected user status is in line with an objective set in advance; and
a proceeding step of performing processing for increasing the value of the electronic money when it is determined that the user status is in line with the objective.

10. The information processing method according to Claim 9, wherein the objective is protecting global environment or contributing to society.

11. The information processing method according to Claim 9, wherein the user status is recorded in an electronic money medium in which the electronic money is stored or in a storage device inside a server provided on a network, and the user status is read from the electronic money medium or the storage device when the electronic money is used.

12. The information processing method according to Claim 9, wherein, as the environment of the user, a user status which is in line with the objective is setting, for cooling, an air-conditioning temperature to be equal to or higher than a predetermined temperature, and setting, for heating, an air-conditioning temperature to be lower than or equal to a predetermined temperature.

13. The information processing method according to Claim 9, wherein, as the action of the user, a user status which is in line with the objective is moving at a movement speed lower than or equal to a predetermined speed when the user moves.

14. The information processing method according to Claim 9, wherein the increasing the value is making a discount, increasing a balance, providing a point, or increasing a range in which the right of use can be granted.

15. An electronic money system including a terminal device to which an electronic money medium in which electronic money, which is money, a point, or a right of use represented by electronic data, is stored is presented, and a server connected to the terminal device via a network, the electronic money system being **characterized by** comprising:
means for detecting, when the electronic money medium is presented to the terminal device, a use or a use status of the electronic money medium;
means for determining whether or not the detected use or use status is in line with an objective set in advance; and
means for performing processing for increasing the value of the electronic money when it is determined that the use or the use status is in line with the objective.

16. An electronic money system including a terminal device to which an electronic money medium in which electronic money, which is money, a point, or a right of use represented by electronic data, is stored is presented, and a server connected to the terminal device via a network, the electronic money system being **characterized by** comprising:
means for detecting, when the electronic money medium is presented to the terminal device, environment or action of a user of the electronic money medium as a user status;
means for determining whether or not the detected user status is in line with an objective set in advance; and
means for performing processing for increasing the value of the electronic money when it is determined that the user status is in line with the objective.

17. The electronic money system according to Claim 16, wherein the user status is recorded in the electronic money medium or in a storage device inside the server, and the user status is read from the electronic money medium or the storage device when the electronic money medium is presented to the terminal device.

18. A computer-readable recording medium in which electronic money, which is money, a point, or a right of use represented by electronic data, is stored and in which information indicating that the value of the electronic money has been increased because a use or a use status of the electronic money is in line with an objective set in advance is recorded as a track record history.

19. A computer-readable recording medium in which electronic money, which is money, a point, or a right of use represented by electronic data, is stored and in which environment or action of a user of the electronic money is recorded as a user status.
